# EUROPÄISCHE PATENTSCHRIFT

(11) **EP 2 376 871 B1**
(45) Veröffentlichungstag und Bekanntmachung des Hinweises auf die Patenterteilung: **24.10.2012**
(21) Anmeldenummer: 09771519.7
(22) Anmeldetag: 23.11.2009
(51) Int. Cl.: G01D 3/036, G01D 3/08

(54) **VERFAHREN ZUM BETREIBEN EINER SENSORVORRICHTUNG UND SENSORVORRICHTUNG**
METHOD FOR OPERATING A SENSOR APPARATUS AND SENSOR APPARATUS
PROCÉDÉ DE FONCTIONNEMENT D'UN DISPOSITIF CAPTEUR ET DISPOSITIF CAPTEUR

(30) Priorität: 12.12.2008 DE 102008061710
(43) Veröffentlichungstag der Anmeldung: 19.10.2011
(73) Patentinhaber: Continental Automotive GmbH, 30165 Hannover (DE)
(72) Erfinder: PLANKENHORN, Horst, 78048 Villingen-Schwenningen (DE); SCHMIDT, Gunnar, 78052 Villingen-Schwenningen (DE)
(86) Internationale Anmeldenummer: PCT/EP2009/065655
(87) Internationale Veröffentlichungsnummer: WO 2010/066566

(56) Entgegenhaltungen:
- DE-A1- 10 213 658
- DE-A1- 10 332 452
- DE-A1-102005 022 437
- DE-B3-102004 043 052

## Beschreibung

Die Erfindung betrifft ein Verfahren zum Betreiben einer Sensorvorrichtung und eine Sensorvorrichtung, insbesondere für ein Kraftfahrzeug und insbesondere für ein Koppeln mit einem digitalen Tachographen.

Die DE 102 13 658 A1 beschreibt ein Verfahren zur Datenübertragung zwischen Komponenten der Bordelektronik mobiler Systeme, wobei zur Erhöhung der Sicherheit des Informationsaustausches vorgeschlagen wird, die zu übertragenden Daten zu verschlüsseln. Hierzu sind in den betreffenden Bordelektronikkomponenten Einrichtungen zur Verschlüsselung und/oder Entschlüsselung von zu übertragenden bzw. empfangenen Daten vorgesehen.

Die 10 2005 022 437 A1 offenbart eine Messeinrichtung, in Form eines Balgengaszählers, dessen Manipulation besonders erschwert und dessen Prüfung, Kalibrierung und Wartung vereinfacht ist. Die Messeinrichtung umfasst ein metrologisch versiegeltes Gehäuse, in welchem sämtliche messtechnisch wirksamen Bestandteile integriert und einer möglichen Manipulation entzogen sind. Manipulierte oder beschädigte Messeinrichtungen verschließen selbsttätig die Gasleitung und bieten Sicherheit für den Benutzer. Weitergehend wird in der Schrift ein Prepaid-System sowie eine Steuerung, Justierung und Ablesemöglichkeiten vor Ort und aus der Ferne beschrieben.

Die DE 103 32 452 A1 beschreibt ein Verfahren zum Betreiben eines Steuerungs- und Regelungsgerätes in einem Kraftfahrzeug, welches über wenigstens einen RAM-Speicherbereich und wenigstens einen Flash-Speicherbereich sowie über einen Eingangs- und Ausgangsbereich verfügt, über den das Steuerungs- und Regelungsgerät mit anderen Steuerungs- und Regelungsgeräten sowie mit Sensoren und Aktuatoren signaltechnisch in Verbindung steht. Zur koordinierten und hinsichtlich wichtiger Steuerungs- und Regelungsabläufe störungsfreier Inbetriebnahme dieses Steuerungs- und Regelungsgerätes sowie die Inbetriebnahme des Gesamtfahrzeuges ist vorgesehen, dass in dem Steuerungs- und Regelungsgerät Programme und/oder Daten verschlüsselt abgespeichert sind, die nach dem Empfang eines von einem anderen Steuerungs- und Regelungsgerät versandten Entschlüsselungscodes entschlüsselt und erst anschließend zur Steuerungs- und Regelungstätigkeit freigegeben werden.

Die 10 2004 043 052 B3 offenbart ein Verfahren zur Erkennung von Manipulationen an einer Anordnung, bestehend aus einem impulsgebenden Sensor und einer Aufzeichnungseinheit. Insbesondere bei einem Tachographen gilt es, jede Möglichkeit zur Manipulation zu beseitigen. Hierzu schlägt die Erfindung vor, dass der Sensor an die Aufzeichnungseinheit Echtzeitimpulse und zyklisch auf erste Anforderungsbefehle höhere Datensignale einer Messung übermittelt und auf zeitlich zu den ersten Anforderungsbefehlen versetzte zweite Anforderungsbefehle eine Echtzeitimpulsanzahl empfängt. Ein Datensignalauswertungsmodul vergleicht die Echtzeitimpulsanzahl und eine Datensignalimpulsanzahl miteinander und erzielt dadurch höchste Sicherheit gegen Manipulation.

In der US 6,982,625 B2 ist ein Ereignisaufzeichner für ein Übertragen und Speichern von elektronischen Signaturdaten offenbart. Der Ereignisaufzeichner ist ausgebildet zum Anbringen an einem Fahrzeug und zum Aussenden verschlüsselter Signaturen und Daten. Im Falle eines Unfalls oder eines Verkehrsvergehens wird dadurch ein elektronischer Fingerabdruck hinterlassen, der durch eine externe Datenerfassungseinrichtung empfangbar ist. Der Ereignisaufzeichner ist auf einer Chipkarte integriert und in einem manipulationssicheren Gehäuse angeordnet. Der Ereignisaufzeichner umfasst einen Mikrocomputer, einen Speicher und einen Sender/Empfänger. Ferner ist ein Sensor vorgesehen zum Erfassen plötzlicher Beschleunigungen. Manipulation des Ereignisaufzeichners ist durch Messung physikalischer Kräfte auf den Ereignisaufzeichner erkennbar und kann ein Stilllegen des Fahrzeugs zu Folge haben.

In der DE 198 21 696 A1 sind ein Verfahren und eine Vorrichtung zum manipulationssicheren Übertragen und Speichern einer Information, insbesondere einer von einem Kraftfahrzeug zurückgelegten Wegstrecke offenbart. Die Information ist durch eine Anzahl von zeitlich aufeinanderfolgenden Impulsen gegeben. Eine Zähleinheit zählt einlaufende Impulse. Jeweils nach vorbestimmten Zeitdauern wird die vorhandene Anzahl der eingelaufenden Impulse in nach einem Verschlüsselungsalgorithmus verschlüsselter Form an eine Empfängereinheit übertragen. In der Empfängereinheit wird die nach dem gleichen Verschlüsselungsalgorithmus entschlüsselte Anzahl ermittelt und die Summe aller Anzahlen gespeichert. Die Zähleinheit enthält einen Mikroprozessor mit zugehörigen Speichereinheiten und ist über eine Datenleitung mit der Empfängereinheit verbunden. Die Empfängereinheit enthält einen Mikroprozessor und einen Speicher. Ein Impulsgeber ist manipulationssicher mit der Zähleinheit verbunden.

In der DE 196 10 161 A1 ist eine Datenübertragungsvorrichtung in einem Fahrzeug bestehend aus einem Impulsgeber und einem Kontrollgerät sowie ein Impulsgeber für das Kontrollgerät offenbart. Ein von einem Sensorelement generiertes Signal wird zusätzlich zu einer bekannten Übertragung von dem Impulsgeber an das Kontrollgerät nach Aufforderung durch das Kontrollgerät verschlüsselt über eine Datenleitung gesendet. Im Kontrollgerät wird das verschlüsselt übertragene Signal mit dem dort registrierten, zuvor in herkömmlicher Weise übertragenen Signal verglichen. Durch diesen Vergleich sind Manipulationen an der Übertragungsstrecke nachweisbar. Der Impulsgeber besitzt ein Sensorelement zur Erfassung einer Drehfrequenz eines Getriebezahnrads und eine Schaltungsanordnung für eine Signalaufbereitung. Das Sensorelement kann ein Hall-Sensorelement sein. Der Impulsgeber oder das Kontrollgerät weist eine Überwachungsfunktion auf mit Rücksetzfunktion. Eine Initialisierung ist vorgesehen mit einer Übertragung eines Schlüssels vom Kontrollgerät an den Impulsgeber.

Die Aufgabe der Erfindung ist, ein Verfahren zum Betreiben einer Sensorvorrichtung und eine Sensorvorrichtung zu schaffen, das beziehungsweise die zuverlässig ist und die eine kostengünstige Sensorvorrichtung ermöglicht.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein Verfahren zum Betreiben einer Sensorvorrichtung und eine entsprechende Sensorvorrichtung. Die Sensorvorrichtung umfasst ein Gehäuse mit einer Sicherheitseinrichtung zum Erfassen von unbefugten Eingriffen in das Gehäuse. Ferner umfasst die Sensorvorrichtung eine sichere erste Recheneinrichtung mit einem sicheren, nichtflüchtigen ersten Speicher, die in dem Gehäuse angeordnet ist, und eine zweite Recheneinrichtung, die einen zweiten Speicher umfasst oder der der zweite Speicher zugeordnet ist und die mit dem zweiten Speicher in dem Gehäuse angeordnet ist. Ferner umfasst die Sensorvorrichtung mindestens ein Sensorelement, das mit der zweiten Recheneinrichtung elektrisch gekoppelt ist zum Zuführen eines Sensorsignals des mindestens einen Sensorelements zu der zweiten Recheneinrichtung. Eine Temperatur in dem Gehäuse wird erfasst. Die erste Recheneinrichtung wird nur dann in Betrieb genommen wird, wenn die erfasste Temperatur in einem vorgegebenen Temperaturbereich liegt. Ein Sitzungsschlüssel wird durch die erste Recheneinrichtung ermittelt. Der Sitzungsschlüssel wird in dem zweiten Speicher gespeichert. Die erste Recheneinrichtung wird nach dem Speichern des Sitzungsschlüssels in dem zweiten Speicher außer Betrieb genommen. Daten werden abhängig von dem mittels des mindestens einen Sensorelements erfassten Sensorsignals ermittelt. Ferner werden die Daten durch die zweite Recheneinrichtung abhängig von dem Sitzungsschlüssel verschlüsselt und/oder signiert.

Die Erfindung beruht auf der Erkenntnis, dass die sichere erste Recheneinrichtung, die zum Beispiel als ein Chipkarten-Controller ausgebildet ist, im Allgemeinen nur in einem niedrigen Temperaturbereich von beispielsweise etwa -20 bis +70 oder + 85°C betrieben werden darf, um einen ordnungsgemäßen Betrieb sicherstellen zu können. Insbesondere in einem Kraftfahrzeug muss die Sensorvorrichtung jedoch in einem größeren Temperaturbereich von beispielsweise etwa -40 bis +150°C zuverlässig funktionieren. Daher wird der Betrieb der sicheren ersten Recheneinrichtung auf den Temperaturbereich beschränkt, der den ordnungsgemäßen Betrieb der ersten Recheneinrichtung ermöglicht. Ein zulässiger Lagertemperaturbereich der ersten Recheneinrichtung ist jedoch groß genug, um ein Aufbewahren der ersten Recheneinrichtung im stromlosen Zustand bei dem zum Beispiel für das Kraftfahrzeug vorgesehenen großen Temperaturbereich zu ermöglichen, ohne dass befürchtet werden muss, dass die erste Recheneinrichtung Schaden nimmt. Die Informationen, die in dem sicheren ersten Speicher der ersten Recheneinrichtung sicher vor unbefugten Manipulationen oder Zugriffen geschützt gespeichert sind oder die abhängig von solchen durch die erste Recheneinrichtung ermittelt werden, wie insbesondere der Sitzungsschlüssel, können insbesondere bei einem Betriebsbeginn der Sensorvorrichtung der zweiten Recheneinrichtung zur Verfügung gestellt werden, insbesondere durch Speichern in dem zweiten Speicher. Dieser Vorgang kann auch als "Pairing" oder Paarung bezeichnet werden. Die zweite Recheneinrichtung, die zum Beispiel als ein Mikrocontroller ausgebildet ist, weist im Allgemeinen keine Sicherheitsmerkmale wie die sichere erste Recheneinrichtung auf und ist in dem größeren Temperaturbereich des Fahrzeugs zuverlässig nutzbar. Nach dem Speichern des Sitzungsschlüssels in dem zweiten Speicher wird daher die erste Recheneinrichtung außer Betrieb genommen und das Verschlüsseln und/oder Signieren der Daten erfolgt durch die zweite Recheneinrichtung abhängig von dem Sitzungsschlüssel. Durch die Schutzeinrichtung des Gehäuses, die zumindest während eines Betriebs der zweiten Recheneinrichtung in Betrieb ist, schützt die zweite Recheneinrichtung und den zweiten Speicher und insbesondere den Sitzungsschlüssel vor unbefugten Manipulationen oder Zugriffen. Die Sensorvorrichtung ist so besonders geeignet für ein Nutzen in einem Fahrzeug und für ein Koppeln mit einem Tachographen.

Ein Vorteil ist, dass eine kostengünstige, handelsübliche sichere erste Recheneinrichtung genutzt werden kann, die bereits mit Sicherheitszertifizierung erhältlich ist. Geheimzuhaltende Informationen sind so sicher in dem ersten Speicher gespeichert unabhängig davon, ob die Sensorvorrichtung bestromt wird oder die Sicherheitseinrichtung des Gehäuses in Betrieb ist. Es ist daher auch keine Batterie erforderlich, um elektrische Energie auch für Zeiten bereitzustellen, wenn der Sensorvorrichtung von außen keine elektrische Energie zugeführt wird. Ferner ist die Sensorvorrichtung vergleichsweise einfach sicherheitszertifizierbar, insbesondere auch bei Änderungen von Programmen oder Programmteilen der Sensorvorrichtung, also der Software. Während des Betriebs der Sensorvorrichtung sind die zweite Recheneinrichtung und der zweite Speicher durch die Sicherheitseinrichtung geschützt. Die Sensorvorrichtung ist dadurch auch dann zuverlässig und sicher betreibbar, wenn die sichere erste Recheneinrichtung außer Betrieb ist.

In einer vorteilhaften Ausgestaltung wird die erste Recheneinrichtung gesteuert durch die zweite Recheneinrichtung in Betrieb und/oder außer Betrieb genommen. Dies hat den Vorteil, dass keine separate Steuereinrichtung vorgesehen sein muss und dass das in Betrieb nehmen oder außer Betrieb nehmen einfach abhängig von Informationen erfolgen kann, die der zweiten Recheneinrichtung vorliegen. Beispielsweise wird das Paaren durchgeführt nach Aufforderung durch eine externe Vorrichtung, mit der die Sensorvorrichtung gekoppelt ist, zum Beispiel durch den Tachographen. Die Kommunikation mit der externen Vorrichtung erfolgt bevorzugt durch die zweite Recheneinrichtung, so dass dieser die Information vorliegt, ob das Paaren aktuell durchgeführt werden soll oder nicht. Die zweite Recheneinrichtung eignet sich daher besonders für das Steuern der ersten Recheneinrichtung.

In einer weiteren vorteilhaften Ausgestaltung wird die Sicherheitseinrichtung des Gehäuses überprüft. Die erste Recheneinrichtung wird nur dann in Betrieb genommen, wenn bei dem Überprüfen der Sicherheitseinrichtung eine Integrität des Gehäuses festgestellt wird. Dies hat den Vorteil, dass dadurch sichergestellt ist, dass insbesondere der Sitzungsschlüssel nicht unbefugt abgegriffen werden kann, wenn dieser in dem zweiten Speicher gespeichert wird oder ist.

In einer weiteren vorteilhaften Ausgestaltung wird zusätzlich zu dem Speichern des Sitzungsschlüssels in dem zweiten Speicher durch die erste Recheneinrichtung mindestens ein Programmteil und/oder mindestens ein Identifikationsdatum und/oder mindestens ein Parameter aus dem ersten Speicher gelesen und in dem zweiten Speicher gespeichert. Die zweite Recheneinrichtung wird unter Nutzung des übertragenen mindestens einen Programms und/oder mindestens einen Identifikationsdatums und/oder mindestens einen Parameters betrieben. Der Vorteil ist, dass diese weiteren zu schützenden Informationen sicher in dem sicheren ersten Speicher gespeichert sein können und der zweiten Recheneinrichtung beim Paaren zur Verfügung gestellt werden können.

In einer weiteren vorteilhaften Ausgestaltung werden die Sicherheitseinrichtung des Gehäuses und mindestens eine Betriebsgröße und/oder Umgebungsgröße der Sensorvorrichtung überwacht. Bei Feststellen einer Verletzung der Integrität des Gehäuses oder eines unzulässigen Werts oder einer unzulässigen Änderung des Werts der mindestens einen Betriebsgröße oder Umgebungsgröße wird zumindest der Sitzungsschlüssel aus dem zweiten Speicher gelöscht wird. Der Vorteil ist, dass zumindest der Sitzungsschlüssel so gut geschützt ist vor einer Manipulation oder einem unbefugten Zugriff.

In diesem Zusammenhang ist es vorteilhaft, wenn neben dem Sitzungsschlüssel auch der übertragene mindestens eine Programmteil und/oder das übertragene mindestens eine Identifikationsdatum und/oder der übertragene mindestens eine Parameter aus dem zweiten Speicher gelöscht wird. Der Vorteil ist, dass so auch der mindestens eine Programmteil und/oder das mindestens eine Identifikationsdatum und/oder der mindestens eine Parameter gut geschützt sind vor einer Manipulation oder einem unbefugten Zugriff.

In diesem Zusammenhang ist es weiter vorteilhaft, wenn das Löschen durch Überschreiben erfolgt. Dies ist besonders sicher.

In einer weiteren vorteilhaften Ausgestaltung ist die Umgebungsgröße die Temperatur in dem Gehäuse oder ist die Betriebsgröße eine Betriebsspannung der Sensorvorrichtung. Dadurch sind Manipulationen der Temperatur oder der Betriebsspannung erkennbar und zumindest der Sitzungsschlüssel vor unbefugter Manipulation oder unbefugtem Zugriff geschützt.

In einer vorteilhaften Ausgestaltung der Sensorvorrichtung ist das Gehäuse gebildet aus mindestens einer Leiterplatte, auf der die erste und/oder die zweite Recheneinrichtung unmittelbar angeordnet sind. Der Vorteil ist, dass eine sehr kompakte Bauform der Sensorvorrichtung möglich ist. Bevorzugt ist das Gehäuse aus mindestens zwei Leiterplatten gebildet, die einen Leiterplattenstapel bilden. Die mindestens eine Leiterplatte kann auch als Hybrid ausgebildet sein.

In diesem Zusammenhang ist es vorteilhaft, wenn die erste und/oder die zweite Recheneinrichtung in die mindestens eine Leiterplatte integriert sind. Dies kann auch als "High Density Integration", oder kurz: HDI, bezeichnet werden. Dadurch ist eine besonders kompakte Bauform der Sensorvorrichtung möglich.

In einer weiteren vorteilhaften Ausgestaltung der Sensorvorrichtung umfasst die Sicherheitseinrichtung mindestens zwei Lagen von Leiterbahnen, die auf der mindestens einen Leiterplatte ausgebildet sind, und die Leiterbahnen mindestens in einem zu schützenden Bereich des Gehäuses ausgebildet sind. Dadurch ist die Sicherheitseinrichtung sehr einfach und kostengünstig an dem Gehäuse ausbildbar. Bevorzugt sind die Leiterbahnen der Sicherheitseinrichtung über der gesamten Leiterplatte ausgebildet, zumindest jedoch in dem zu schützenden Bereich des Gehäuses, also insbesondere in einem Bereich der zweiten Recheneinrichtung und des zweiten Speichers und einer Verbindung zu der ersten Recheneinrichtung. Bevorzugt sind Leiterbahnen der Sicherheitseinrichtung in sehr feinem Abstand zueinander und vorzugsweise mäanderförmig ausgebildet, so dass ein Durchbohren der Leiterplatte mit einem sehr feinen Bohrer nicht möglich ist, ohne dadurch zumindest eine der Leiterbahnen zu durchtrennen oder einen Kurzschluss zwischen Leiterbahnen herzustellen. Unterbrechungen oder Kurzschlüsse von Leiterbahnen sind einfach und zuverlässig erkennbar. Das Innere des Gehäuses kann so zuverlässig geschützt sein.

In einer weiteren vorteilhaften Ausgestaltung der Sensorvorrichtung ist das mindestens eine Sensorelement in dem Gehäuse angeordnet. Dadurch ist auch das Sensorelement zuverlässig vor Manipulationen geschützt.

In einer weiteren vorteilhaften Ausgestaltung der Sensorvorrichtung ist das mindestens eine Sensorelement als ein Hall-Sensorelement, ein Induktiv-Sensorelement oder als ein GMR-Sensorelement ausgebildet. Dadurch ist insbesondere sehr einfach eine Drehzahl ermittelbar, zum Beispiel eines Zahnrads eines Getriebes.

In einer weiteren vorteilhaften Ausgestaltung der Sensorvorrichtung ist die Sensorvorrichtung als ein Geschwindigkeitsgeber für ein Fahrzeug ausgebildet. Durch den großen Betriebstemperaturbereich ist die Sensorvorrichtung besonders geeignet für das Nutzen in dem Fahrzeug und insbesondere Kraftfahrzeug, zum Beispiel an einem Getriebe. Aufgrund der hohen Manipulationssicherheit der Sensorvorrichtung ist die Sensorvorrichtung insbesondere geeignet für das Koppeln mit dem Tachographen. Die Sensorvorrichtung ist daher bevorzugt als Geschwindigkeitsgeber für den Tachographen ausgebildet.

Ausführungsbeispiele der Erfindung sind im Folgenden anhand der schematischen Zeichnungen erläutert. Es zeigen:
- Figur 1: ein Blockdiagramm einer Sensorvorrichtung,
- Figur 2: eine erste Ausführungsform der Sensorvorrichtung,
- Figur 3: eine zweite Ausführungsform der Sensorvorrichtung und
- Figur 4: ein Ablaufdiagramm eines Programms zum Betreiben der Sensorvorrichtung.

Elemente gleicher Konstruktion oder Funktion sind figuren-übergreifend mit den gleichen Bezugszeichen versehen.

Eine Sensorvorrichtung SV ist vorzugsweise als ein Geschwindigkeitsgeber für ein Fahrzeug und insbesondere Kraftfahrzeug ausgebildet. Die Sensorvorrichtung SV ist insbesondere ausgebildet für ein Koppeln mit einem Tachographen. Eine solche Sensorvorrichtung SV muss hohen Sicherheitsanforderungen genügen, beispielsweise gemäß E3H oder CC EAL 4+ oder anderen relevanten Vorschriften. Für ein Nutzen in einem Fahrzeug und insbesondere Kraftfahrzeug muss die Sensorvorrichtung SV ferner in einem großen Temperaturbereich von beispielsweise etwa -40 bis +150°C zuverlässig und sicher betreibbar sein. Handelsübliche sichere Recheneinrichtungen, zum Beispiel Chipkarten-Controller, die auch als "Smart Card Controller" bezeichnet werden können, weisen Sicherheitsmerkmale auf, die eine unbefugte Manipulation und einen unbefugten Zugriff auf gespeicherte oder verarbeitete Informationen erschweren, und sind gegebenenfalls bereits in sicherheitszertifizierter Form kostengünstig erhältlich. Diese sind jedoch gemäß ihrer Spezifikation im Allgemeinen nur in einem niedrigen Temperaturbereich von beispielsweise etwa -20 bis +70 oder +85°C ordnungsgemäß, das heißt zuverlässig und sicher betreibbar, und sind daher für das Nutzen in dem Fahrzeug oder Kraftfahrzeug und insbesondere in einem Geschwindigkeitsgeber, der im Allgemeinen an einem Getriebe des Fahrzeugs oder Kraftfahrzeugs angeordnet ist, nicht geeignet. Jedoch weisen diese sicheren Recheneinrichtungen im Allgemeinen einen Lagertemperaturbereich auf, der den großen Temperaturbereich umfasst, das heißt, die sicheren Recheneinrichtungen können ohne Gefahr der Zerstörung auch bei einer Temperatur von zum Beispiel 150°C im stromlosen Zustand aufbewahrt werden. Dies ermöglicht, die Sensorvorrichtung SV mit einer solchen sicheren Recheneinrichtung auszustatten und zuverlässig und sicher in dem großen Temperaturbereich zu betreiben.

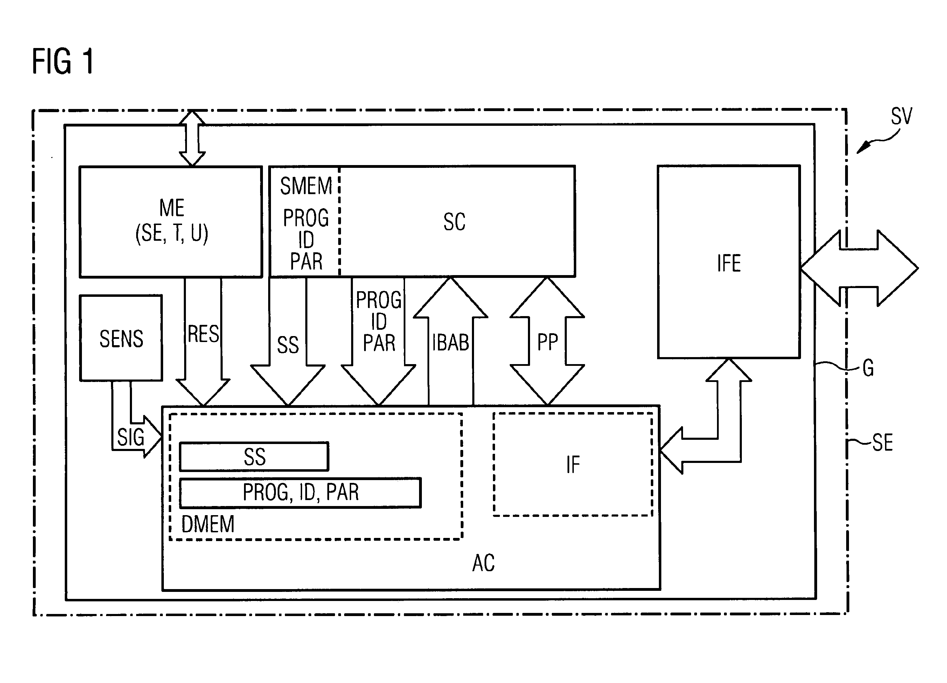

Die Sensorvorrichtung SV umfasst eine solche sichere erste Recheneinrichtung SC, die einen nichtflüchtigen, sicheren ersten Speicher SMEM aufweist (Figur 1). In dem sicheren ersten Speicher SMEM gespeicherte Informationen sind durch die Sicherheitsmerkmale der ersten Recheneinrichtung SC vor unbefugten Manipulationen und unbefugtem Zugriff geschützt. Dies gilt insbesondere auch dann, wenn die erste Recheneinrichtung SC außer Betrieb ist, sich also im stromlosen Zustand befindet oder, entsprechend, keine Betriebsspannung angelegt ist. Die Sensorvorrichtung SV umfasst ferner eine zweite Recheneinrichtung AC, die beispielsweise als ein Mikrocontroller ausgebildet ist und die keine Sicherheitsmerkmale aufweisen muss. Die zweite Recheneinrichtung AC weist einen Betriebstemperaturbereich auf, der den großen Temperaturbereich von zum Beispiel etwa -40 bis +150°C umfasst. Die zweite Recheneinrichtung AC kann daher auch bei Temperaturen zuverlässig betrieben werden, bei denen die erste Recheneinrichtung SC nicht zuverlässig und sicher betrieben werden kann. Der zweiten Recheneinrichtung AC ist ein zweiter Speicher DMEM zugeordnet oder die zweite Recheneinrichtung AC weist den zweiten Speicher DMEM auf. Der zweite Speicher DMEM kann als flüchtiger oder als nichtflüchtiger Speicher ausgebildet sein. Bevorzugt ist der zweite Speicher DMEM als flüchtiger Speicher ausgebildet.

Die erste Recheneinrichtung SC mit dem ersten Speicher SMEM und die zweite Recheneinrichtung AC mit dem zweiten Speicher DMEM sind in einem Gehäuse G angeordnet, das eine Sicherheitseinrichtung SE aufweist. Die Sicherheitseinrichtung SE ist ausgebildet, unbefugte Manipulationen an dem Gehäuse G, zum Beispiel ein Öffnen des Gehäuses G oder ein Durchbohren oder Aufschleifen des Gehäuses G, erkennbar zu machen und insbesondere automatisch elektrisch erfassbar zu machen. Das Öffnen oder Durchbohren oder Aufschleifen des Gehäuses G stellt eine Verletzung der Integrität des Gehäuses G dar. Die Sicherheitseinrichtung SE umfasst bevorzugt sehr dicht beieinander ausgebildete schmale Leiterbahnen, die zumindest in einem zu schützenden Bereich des Gehäuses G, bevorzugt jedoch an dem gesamten Gehäuse G, derart ausgebildet sind, dass das Öffnen, Durchbohren oder Aufschleifen des Gehäuses G kaum möglich ist, ohne zumindest eine der Leiterbahnen zu durchtrennen oder unterbrechen oder einen Kurzschluss zwischen Leiterbahnen hervorzurufen. Bevorzugt weist die Sensorvorrichtung SV in dem Gehäuse G auch eine Manipulationserkennungseinrichtung ME auf, die ausgebildet ist, derartige Durchtrennungen, Unterbrechungen oder Kurzschlüsse elektrisch zu erfassen und die - zumindest mögliche - Verletzung der Integrität des Gehäuses G festzustellen. Die Manipulationserkennungseinrichtung ME ist dazu elektrisch mit der Sicherheitseinrichtung SE gekoppelt. Die Manipulationserkennungseinrichtung ME ist ferner vorzugsweise ausgebildet zum Erfassen mindestens einer Umgebungsgröße UG der Sensorvorrichtung SV, insbesondere einer Temperatur T in dem Gehäuse G, und/oder mindestens einer Betriebsgröße BG der Sensorvorrichtung SV, insbesondere einer Betriebsspannung U der Sensorvorrichtung SV. Eine - zumindest mögliche - Manipulation der Sensorvorrichtung SV wird beispielsweise erkannt bei einem unzulässigen Wert oder einer unzulässigen Änderung des Werts der mindestens einen Betriebsgröße (BG) oder Umgebungsgröße (UG). Beispielsweise ist die Manipulationserkennungseinrichtung ME ausgebildet zum Erzeugen eines Rücksetzsignals RES zum Zurücksetzen insbesondere der zweiten Recheneinrichtung AC. Die Manipulationserkennungseinrichtung ME kann als ein Bauelement separat von der zweiten Recheneinrichtung AC ausgebildet sein oder kann als Teil der zweiten Recheneinrichtung AC ausgebildet sein.

Die Sensorvorrichtung SV umfasst ferner mindestens ein Sensorelement SENS, das auch als Messkopf bezeichnet werden kann. Das mindestens eine Sensorelement SENS ist bevorzugt innerhalb des durch die Sicherheitseinrichtung SE geschützten Gehäuses G angeordnet, kann jedoch auch außerhalb des Gehäuses G angeordnet sein. Das mindestens eine Sensorelement SENS ist ausgebildet, ein Sensorsignal SIG auszugeben abhängig von einem erfassten Wert einer Messgröße. Bevorzugt ist das mindestens eine Sensorelement SENS als ein Hall-Sensorelement, ein Induktiv-Sensorelement oder als ein GMR-Sensorelement ausgebildet. Das mindestens eine Sensorelement SENS kann jedoch auch anders ausgebildet sein. Das mindestens eine Sensorelement SENS ist vorzugsweise mit der zweiten Recheneinrichtung AC elektrisch gekoppelt zum Zuführen des Sensorsignals SIG.

Bevorzugt umfasst die Sensorvorrichtung SV auch eine Schnittstelleneinrichtung IFE auf. Diese umfasst beispielsweise eine physikalische Schnittstelle zu der externen Einrichtung, insbesondere zu dem Tachographen, und/oder eine Einrichtung zur Energieversorgung und/oder eine Überwachungseinrichtung, die auch als "Watch Dog"-Einrichtung bezeichnet werden kann, und/oder eine Datenein-/ausgabeeinrichtung. Die Schnittstelleneinrichtung IFE ist vorzugsweise insbesondere elektrisch mit der zweiten Recheneinrichtung AC gekoppelt. Die zweite Recheneinrichtung AC weist dazu bevorzugt eine Schnittstelle IF auf. Die zweite Recheneinrichtung AC ist elektrisch mit der ersten Recheneinrichtung SC gekoppelt. Die Schnittstelle IF kann ferner dazu ausgebildet sein zum elektrischen Koppeln der zweiten Recheneinrichtung AC mit der ersten Recheneinrichtung SC.

In dem sicheren ersten Speicher SMEM sind zu schützende Informationen sicher gespeichert. Diese zu schützenden Informationen können beispielsweise mindestens ein Programm oder Programmteil PROG und/oder mindestens ein Identifikationsdatum ID und/oder mindestens einen Parameter PAR umfassen. Das mindestens eine Programm oder der mindestens eine Programmteil PROG ist insbesondere vorgesehen zur Ausführung auf der zweiten Recheneinrichtung AC und betrifft insbesondere sicherheitsrelevante Funktionen, zum Beispiel kryptographische Funktionen wie Verschlüsselung oder Signatur von Daten. Das mindestens eine Identifikationsdatum ID betrifft beispielsweise Informationen, die erforderlich sind im Rahmen einer Authentisierungsprozedur mit der externen Einrichtung, insbesondere dem Tachographen. Der mindestens eine Parameter PAR ist beispielsweise ein Parameter, der den Betrieb der Sensorvorrichtung SV betrifft. Das mindestens eine Programm oder der mindestens eine Programmteil PROG, das mindestens eine Identifikationsdatum ID oder der mindestens eine Parameter PAR können jedoch auch anders vorgesehen sein.

Die erste Recheneinrichtung SC ist dazu ausgebildet, während eines Paarungsvorgangs, der auch als "Pairing" bezeichnet werden kann, einen Sitzungsschlüssel SS zu ermitteln. Vorzugsweise wird der Sitzungsschlüssel SS anschließend an die zweite Recheneinrichtung AC übertragen und in dem zweiten Speicher DMEM gespeichert. Ferner werden bevorzugt auch das mindestens eine Programm oder der mindestens eine Programmteil PROG und/oder das mindestens eine Identifikationsdatum ID und/oder der mindestens eine Parameter PAR an die zweite Recheneinrichtung AC übertragen und in dem zweiten Speicher DMEM gespeichert.

Die erste Recheneinrichtung wird jedoch nur dann in Betrieb genommen, wenn die Temperatur T in dem Gehäuse G aktuell innerhalb eines vorgegebenen Temperaturbereichs TB liegt, also zum Beispiel innerhalb des niedrigen Temperaturbereichs, in dem die erste Recheneinrichtung SC zuverlässig und sicher betrieben werden kann, zum Beispiel innerhalb von -20 bis +70°C. Vorzugsweise wird die erste Recheneinrichtung SC nur für den Paarungsvorgang in Betrieb genommen und bleibt ansonsten außer Betrieb. Vorzugsweise ist die Sensorvorrichtung SV mit Klemme 30 einer Fahrzeugstromversorgung elektrisch gekoppelt. Dadurch ist die Sensorvorrichtung SV nahezu ununterbrochen mit elektrischer Energie versorgbar, so dass der Paarungsvorgang nur selten durchgeführt werden muss. Der Paarungsvorgang wird bevorzugt nach einer entsprechenden Anforderung durchgeführt, die beispielsweise durch die externe Einrichtung und insbesondere durch den Tachographen an die Sensorvorrichtung SV übermittelt wird, zum Beispiel über die Schnittstelleneinrichtung IFE an die zweite Recheneinrichtung AC. Bevorzugt wird der Paarungsvorgang durch den Tachographen erst angefordert, wenn eine Werkstatt-Chipkarte in diesen eingeführt ist. Dabei wird vorzugsweise ein neuer Sitzungsschlüssel SS ermittelt und in dem ersten und dem zweiten Speicher SMEM, DMEM gespeichert. Der Paarungsvorgang erfolgt bevorzugt gemäß einem Paarungsprotokoll PP zwischen der ersten Recheneinrichtung SC und dem Tachographen unter Nutzung der Schnittstelle IF der zweiten Recheneinrichtung AC.

Um einen solchen Paarungsvorgang zu vermeiden, wenn beispielsweise aufgrund einer kurzen Unterbrechung der Fahrzeugstromversorgung, zum Beispiel aufgrund eines Batteriewechsels, insbesondere der Sitzungsschlüssel SS aus dem zweiten Speicher DMEM gelöscht wurde, kann vorgesehen sein, dass beispielsweise nach einem Verlust der Betriebsspannung, beispielsweise für eine vorgegebene Zeitdauer von weniger als zum Beispiel zehn bis zwanzig Minuten, insbesondere der Sitzungsschlüssel SS und gegebenenfalls auch das mindestens eine Programm oder der mindestens eine Programmteil PROG, das mindestens eine Identifikationsdatum ID und/oder der mindestens eine Parameter PAR von dem ersten Speicher SMEM der ersten Recheneinrichtung SC in den zweiten Speicher DMEM der zweiten Recheneinrichtung AC kopiert wird, wenn bei der erneuten Betriebsaufnahme nach dieser kurzen Unterbrechung von weniger als der vorgegebenen Zeitdauer festgestellt wird, dass die Schutzeinrichtung SE unversehrt ist und die Temperatur T in dem Gehäuse G aktuell innerhalb des vorgegebenen Temperaturbereichs TB liegt. Dies beruht auf der Annahme, dass in das durch die Schutzeinrichtung SE gesicherte Gehäuse G mit hoher Wahrscheinlichkeit nicht innerhalb dieser vorgegebenen Zeitdauer eingedrungen werden kann, ohne dass dies bei der erneuten Betriebsaufnahme insbesondere durch die Manipulationserkennungseinrichtung ME festgestellt werden würde. Ein erneuter Paarungsvorgang ist dann erst erforderlich, wenn der Betrieb der Sensorvorrichtung SV für länger als die vorgegebene Zeitdauer unterbrochen wurde oder die Bedingungen für die Inbetriebnahme der ersten Recheneinrichtung SC bei der erneuten Betriebsaufnahme nicht erfüllt sind. Die vorgegebene Zeitdauer ist bevorzugt abhängig von einem Sicherheitsniveau des Gehäuses G und seiner Schutzeinrichtung SE vorgegeben. Insbesondere kann die vorgegebene Zeitdauer umso länger sein, je höher das Sicherheitsniveau ist, also je schwerer es ist, unerkannt in das Gehäuse G einzudringen.

Bevorzugt ist die Sensorvorrichtung SV und insbesondere die zweite Recheneinrichtung AC ausgebildet zum Inbetriebnehmen und/oder Außerbetriebnehmen der ersten Recheneinrichtung SC, bevorzugt abhängig von der Temperatur T in dem Gehäuse G. Die Inbetriebnahme/Außerbetriebnahme IBAB der ersten Recheneinrichtung SC erfolgt bevorzugt durch Aktivieren beziehungsweise Deaktivieren einer Energieversorgung der ersten Recheneinrichtung SC. Durch Deaktivieren der Energieversorgung der ersten Recheneinrichtung SC wird erreicht, dass die Sensorvorrichtung SV auch bei Temperaturen zuverlässig und sicher betrieben werden kann, bei denen der zuverlässige und sichere Betrieb der ersten Recheneinrichtung SC nicht gewährleistet ist.

Die zweite Recheneinrichtung AC ist ausgebildet, abhängig von dem Sitzungsschlüssel SS, der in dem zweiten Speicher DMEM gespeichert ist, Daten zu verschlüsseln und/oder zu signieren, die abhängig von dem Sensorsignal SIG ermittelt wurden. Die verschlüsselten und/oder signierten Daten werden ausgangsseitig der Sensorvorrichtung SV bereitgestellt und beispielsweise an die externe Einrichtung und insbesondere den Tachographen übertragen, zum Beispiel über die Schnittstelleneinrichtung IFE. Das Verschlüsseln und/oder Signieren kann beispielsweise durch Nutzen des mindestens einen Programms oder Programmteils PROG erfolgen, dass bei dem Paarungsvorgang in dem zweiten Speicher DMEM gespeichert wurde. Die zweite Recheneinrichtung greift jedoch vorzugsweise auch auf Programme oder Programmteile zurück, die beispielsweise in einem Nur-Lese-Speicher oder einem Flash-Speicher gespeichert sind, der der zweiten Recheneinrichtung AC zugeordnet ist oder der durch die zweite Recheneinrichtung AC umfasst ist. Dies betrifft insbesondere nicht oder nur wenig sicherheitsrelevante Programme oder Programmteile.

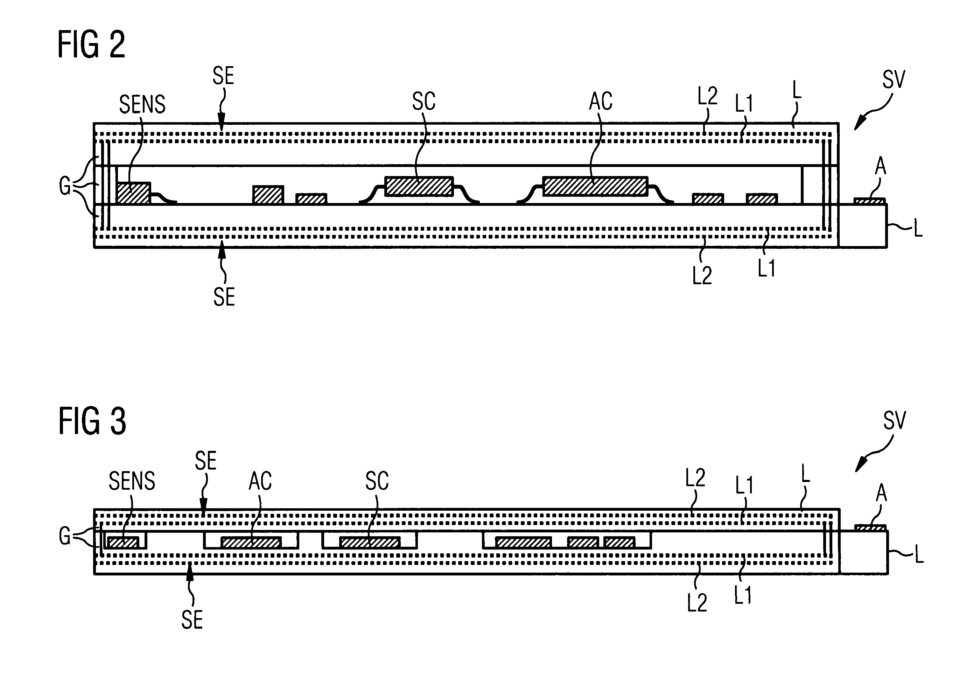

Figur 2 zeigt eine erste Ausführungsform der Sensorvorrichtung SV in einer Schnittdarstellung. Das Gehäuse G ist gebildet durch mindestens eine Leiterplatte L und bevorzugt durch mindestens zwei Leiterplatten L, die als ein Leiterplattenstapel derart voneinander beabstandet angeordnet sind, dass die elektrischen Bauelemente der Sensorvorrichtung SV zwischen diesen angeordnet sind. Auf mindestens einer Leiterplatte L sind die erste und die zweite Recheneinrichtung SC, AC mit dem ersten und dem zweiten Speicher SMEM, DMEM unmittelbar aufgebracht. Bevorzugt ist auch das mindestens eine Sensorelement SENS und/oder die Manipulationserkennungseinrichtung ME und/oder die Schnittstelleneinrichtung IFE unmittelbar auf einer der mindestens einen Leiterplatte L aufgebracht, bevorzugt innerhalb des durch die mindestens eine Leiterplatte L gebildeten Gehäuses G. Außerhalb des Gehäuses G sind an diesem Anschlüsse A vorgesehen, insbesondere für ein Koppeln mit einer Energieversorgung und/oder mit der externen Einrichtung, insbesondere dem Tachographen. Die Schutzeinrichtung SE umfasst vorzugsweise mindestens zwei Leiterbahnlagen, die auf der jeweiligen Leiterplatte L aufgebracht sind. Beispielsweise ist eine erste Lage L1 mit Leiterbahnen und eine zweite Lage L2 mit Leiterbahnen vorgesehen.

Figur 3 zeigt eine zweite Ausführungsform der Sensorvorrichtung SV in einer Schnittdarstellung. Die zweite Ausführungsform entspricht im Wesentlichen der ersten Ausführungsform. Jedoch sind bei der zweiten Ausführungsform Bauelemente und insbesondere Chips der ersten und der zweiten Recheneinrichtung SC, AC in die mindestens eine Leiterplatte L integriert. Dadurch ist eine sogenannte "High Density Integration", oder kurz: HDI, gebildet.

Andere Ausführungsformen der Sensorvorrichtung SV sind ebenfalls möglich. Die mindestens eine Leiterplatte L mit den aufgebrachten Bauelementen kann beispielsweise als gedruckte Schaltung oder als Hybridschaltung ausgebildet sein.

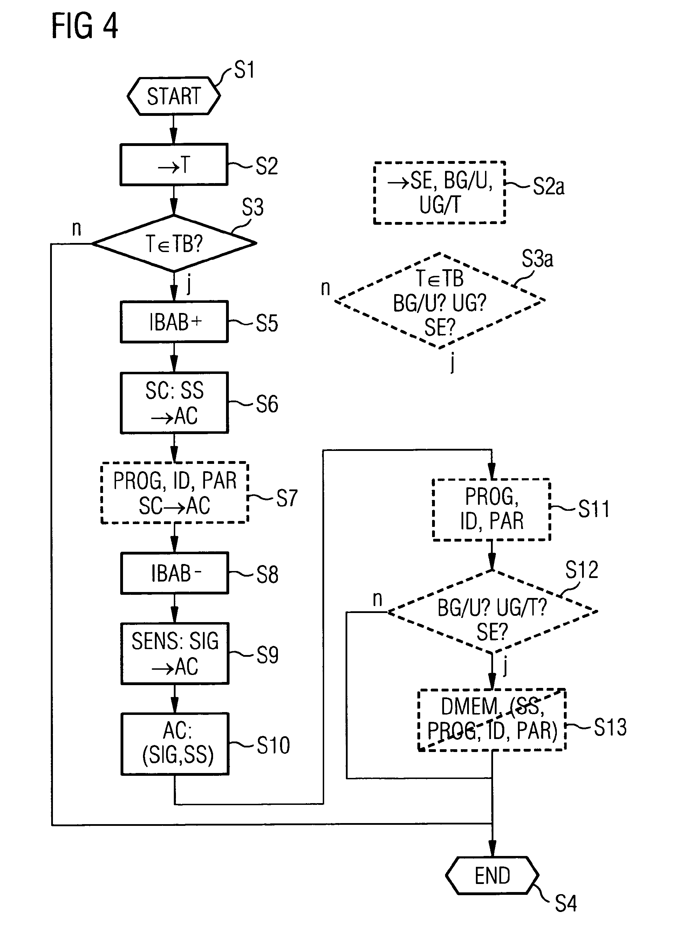

Figur 4 zeigt ein Ablaufdiagramm eines Programms zum Betreiben der Sensorvorrichtung SV. Das Programm beginnt in einem Schritt S1, in dem beispielsweise die Energieversorgung der Sensorvorrichtung SV aktiviert oder eingeschaltet wird und gegebenenfalls die Anforderung der externen Einrichtung und insbesondere des Tachographen zum Durchführen des Paarungsvorgangs empfangen wird.

In einem Schritt S2 wird die Temperatur T in dem Gehäuse G erfasst. In einem Schritt S3 wird überprüft, ob die Temperatur T innerhalb des vorgegebenen Temperaturbereichs TB liegt. Alternativ können auch Schritte S2a und S3a vorgesehen sein. In dem Schritt S2a wird neben dem Erfassen der Temperatur T beispielsweise die Schutzeinrichtung SE abgefragt und/oder die mindestens eine Betriebsgröße BG, zum Beispiel die Betriebsspannung der Sensorvorrichtung SV, und/oder die mindestens Umgebungsgröße erfasst. In dem Schritt S3a wird dann neben dem Überprüfen der Temperatur T gemäß Schritt S3 beispielsweise überprüft, ob die Integrität des Gehäuses G besteht und/oder ob die mindestens eine Betriebsgröße oder Umgebungsgröße einen zulässigen Wert aufweist, beispielsweise durch Vergleich mit einem jeweiligen vorgegebenen Wertebereich. Das Überprüfen wird vorzugsweise durch die zweite Recheneinrichtung AC durchgeführt, kann jedoch beispielsweise auch durch die Manipulationserkennungseinrichtung ME durchgeführt werden. Ist die Bedingung in dem Schritt S3 oder S3a nicht erfüllt, dann wird der Paarungsvorgang nicht durchgeführt und das Programm endet bevorzugt in einem Schritt S4.

Ist die Bedingung in dem Schritt S3 oder S3a jedoch erfüllt, dann wird in einem Schritt S5 die erste Recheneinrichtung SC in Betrieb genommen, beispielsweise durch die zweite Recheneinrichtung AC. In einem Schritt S6 wird durch die erste Recheneinrichtung SC der Sitzungsschlüssel SS ermittelt. Der Sitzungsschlüssel SS wird in dem zweiten Speicher DMEM gespeichert, bevorzugt nach Übertragen an die zweite Recheneinrichtung AC. Ein Schritt S7 kann vorgesehen sein, in dem das mindestens eine Programm oder der mindestens eine Programmteil und/oder das mindestens eine Identifikationsdatum ID und/oder der mindestens eine Parameter PAR aus dem ersten Speicher SMEM in dem zweiten Speicher DMEM gespeichert werden, bevorzugt nach Übertragen an die zweite Recheneinrichtüng AC. Zeitnah zu einem Abschluss des Speicherns beziehungsweise Übertragens des Sitzungsschlüssels SS beziehungsweise des mindestens einen Programms oder Programmteils PROG und/oder Identifikationsdatums ID und/oder Parameters PAR wird die erste Recheneinrichtung SC in einem Schritt S8 außer Betrieb genommen, beispielsweise durch die zweite Recheneinrichtung AC.

In einem Schritt S9 wird durch das mindestens eine Sensorelement SENS das Sensorsignal SIG erfasst und bevorzugt der zweiten Recheneinrichtung AC zugeführt. In einem Schritt S10 verschlüsselt und/oder signiert die zweite Recheneinrichtung AC Daten, die abhängig von dem Sensorsignal SIG ermittelt werden, abhängig von dem Sitzungsschlüssel SS und stellt diese vorzugsweise ausgangsseitig der Sensorvorrichtung SV bereit.

Ein Schritt S11 kann vorgesehen sein, in dem die zweite Recheneinrichtung AC unter Nutzen des mindestens einen Programms oder Programmteils PROG und/oder Identifikationsdatums ID und/oder Parameters PAR betrieben wird. Der Schritt S11 kann auch teilweise oder vollständig mit dem Schritt S10 zusammenfallen, das heißt, das Ermitteln der Daten und/oder das Verschlüsseln und/oder Signieren der Daten und/oder das Bereitstellen der verschlüsselten und/oder signierten Daten kann abhängig von dem mindestens einen Programm oder Programmteil PROG und/oder dem mindestens einen Identifikationsdatum und/oder dem mindestens einen Parameter PAR erfolgen.

Ferner kann ein Schritt S12 vorgesehen sein, in dem die Sicherheitseinrichtung SE und/oder die mindestens eine Betriebsgrößer BG und/oder die mindestens eine Umgebungsgröße UG überwacht wird. Wird ein potentieller Manipulationsversuch erkannt, dann kann in einem Schritt S13 bevorzugt vorgesehen sein, dass ein Speicherinhalt des zweiten Speichers DMEM ganz oder teilweise gelöscht wird, vorzugsweise durch Überschreiben. Insbesondere wird der Sitzungsschlüssel SS aus dem zweiten Speicher DMEM gelöscht. Bevorzugt wird auch das mindestens eine Programm oder der mindestens eine Programmteil PROG und/oder das mindestens eine Identifikationsdatum ID und/oder der mindestens eine Parameter PAR aus dem zweiten Speicher DMEM gelöscht. Für das Löschen kann beispielsweise, falls die Energieversorgung der Sensorvorrichtung SV unzureichend sein sollte, Restenergie genutzt werden, zum Beispiel aus einem Kondensator. Das Programm endet dann bevorzugt in dem Schritt S4. Wird in dem Schritt S12 keine potentielle Manipulation erkannt, dann wird die Sensorvorrichtung SV normal weiterbetrieben, wobei insbesondere die in den Schritten S10 und S11 genannten Funktionen ausgeführt werden.

## Patentansprüche

1. Verfahren zum Betreiben einer Sensorvorrichtung (SV), die umfasst
- ein Gehäuse (G) mit einer Sicherheitseinrichtung (SE) zum Erfassen von unbefugten Eingriffen in das Gehäuse (G),
- eine sichere erste Recheneinrichtung (SC) mit einem sicheren, nichtflüchtigen ersten Speicher (SMEM), die in dem Gehäuse (G) angeordnet ist,
- eine zweite Recheneinrichtung (AC), die einen zweiten Speicher (DMEM) umfasst oder der der zweite Speicher (DMEM) zugeordnet ist und die mit dem zweiten Speicher (DMEM) in dem Gehäuse (G) angeordnet ist, und
- mindestens ein Sensorelement (SENS), das mit der zweiten Recheneinrichtung (AC) elektrisch gekoppelt ist zum Zuführen eines Sensorsignals (SIG) des mindestens einen Sensorelements (SENS) zu der zweiten Recheneinrichtung (AC),
bei dem
- eine Temperatur (T) in dem Gehäuse (G) erfasst wird,
- die erste Recheneinrichtung (SC) nur dann in Betrieb genommen wird, wenn die erfasste Temperatur (T) in einem vorgegebenen Temperaturbereich (TB) liegt,
- ein Sitzungsschlüssel (SS) durch die erste Recheneinrichtung (SC) ermittelt wird und der Sitzungsschlüssel (SS) in dem zweiten Speicher (DMEM) gespeichert wird,
- die erste Recheneinrichtung (SC) nach dem Speichern des Sitzungsschlüssels (SS) in dem zweiten Speicher (DMEM) außer Betrieb genommen wird,
- Daten abhängig von dem mittels des mindestens einen Sensorelements (SENS) erfassten Sensorsignals (SIG) ermittelt werden und
- die Daten durch die zweite Recheneinrichtung (AC) abhängig von dem Sitzungsschlüssel (SS) verschlüsselt und/oder signiert werden.

2. Verfahren nach Anspruch 1, bei dem die erste Recheneinrichtung (SC) gesteuert durch die zweite Recheneinrichtung (AC) in Betrieb und/oder außer Betrieb genommen wird.

3. Verfahren nach einem der vorstehenden Ansprüche, bei dem
- die Sicherheitseinrichtung (SE) des Gehäuses (G) überprüft wird und
- die erste Recheneinrichtung (SC) nur dann in Betrieb genommen wird, wenn bei dem Überprüfen der Sicherheitseinrichtung (SE) eine Integrität des Gehäuses (G) festgestellt wird.

4. Verfahren nach einem der vorstehenden Ansprüche, bei dem
- zusätzlich zu dem Speichern des Sitzungsschlüssels (SS) in dem zweiten Speicher (DMEM) durch die erste Recheneinrichtung (SC) mindestens ein Programmteil (PROG) und/oder mindestens ein Identifikationsdatum (ID) und/oder mindestens ein Parameter (PAR) aus dem ersten Speicher (SMEM) gelesen und in dem zweiten Speicher (DMEM) gespeichert wird und
- die zweite Recheneinrichtung (AC) unter Nutzung des übertragenen mindestens einen Programms (PROG) und/oder mindestens einen Identifikationsdatums (ID) und/oder mindestens einen Parameters (PAR) betrieben wird.

5. Verfahren nach einem der vorstehenden Ansprüche, bei dem
- die Sicherheitseinrichtung (SE) des Gehäuses (G) und mindestens eine Betriebsgröße (BG) und/oder Umgebungsgröße (UG) überwacht werden und
- bei Feststellen einer Verletzung der Integrität des Gehäuses (G) oder eines unzulässigen Werts oder einer unzulässigen Änderung des Werts der mindestens einen Betriebsgröße (BG) oder Umgebungsgröße (UG) zumindest der Sitzungsschlüssel (SS) aus dem zweiten Speicher (DMEM) gelöscht wird.

6. Verfahren nach Anspruch 5, bei dem neben dem Sitzungsschlüssel (SS) auch der übertragene mindestens eine Programmteil (PROG) und/oder das übertragene mindestens eine Identifikationsdatum (ID) und/oder der übertragene mindestens eine Parameter (PAR) aus dem zweiten Speicher (DMEM) gelöscht wird.

7. Verfahren nach Anspruch 5 oder 6, bei dem das Löschen durch Überschreiben erfolgt.

8. Verfahren nach einem der Ansprüche 5 bis 7, bei dem die Umgebungsgröße (UG) die Temperatur (T) in dem Gehäuse (G) ist oder bei dem die Betriebsgröße (BG) eine Betriebsspannung (U) der Sensorvorrichtung (SV) ist.

9. Sensorvorrichtung, die umfasst
- ein Gehäuse (G) mit einer Sicherheitseinrichtung (SE) zum Erfassen von unbefugten Eingriffen in das Gehäuse (G),
- eine sichere erste Recheneinrichtung (SC) mit einem sicheren, nichtflüchtigen ersten Speicher (SMEM), die in dem Gehäuse (G) angeordnet ist,
- eine zweite Recheneinrichtung (AC), die einen zweiten Speicher (DMEM) umfasst oder der der zweite Speicher (DMEM) zugeordnet ist und die mit dem zweiten Speicher (DMEM) in dem Gehäuse (G) angeordnet ist, und
- mindestens ein Sensorelement (SENS), das mit der zweiten Recheneinrichtung (AC) elektrisch gekoppelt ist zum Zuführen eines Sensorsignals (SIG) des mindestens einen Sensorelements (SENS) zu der zweiten Recheneinrichtung (AC),
die ausgebildet ist
- zum Erfassen einer Temperatur (T) in dem Gehäuse (G),
- zum in Betrieb nehmen der ersten Recheneinrichtung (AC) nur dann, wenn die erfasste Temperatur (T) in einem vorgegebenen Temperaturbereich (TB) liegt,
- zum Ermitteln eines Sitzungsschlüssels (SS) durch die erste Recheneinrichtung (SC) und zum Speichern des Sitzungsschlüssels (SS) in dem zweiten Speicher (DMEM),
- zum außer Betrieb nehmen der ersten Recheneinrichtung (SC) nach dem Speichern des Sitzungsschlüssels (SS) in dem zweiten Speicher (DMEM),
- zum Ermitteln von Daten abhängig von dem mittels des mindestens einen Sensorelements (SENS) erfassten Sensorsignals (SIG) und
- zum Verschlüsseln und/oder Signieren der Daten durch die zweite Recheneinrichtung (AC) abhängig von dem Sitzungsschlüssel (SS).

10. Sensorvorrichtung nach Anspruch 9, bei der das Gehäuse (G) gebildet ist aus mindestens einer Leiterplatte (L), auf der die erste und/oder die zweite Recheneinrichtung (SC, AC) unmittelbar angeordnet sind.

11. Sensorvorrichtung nach Anspruch 10, bei der die erste und /oder die zweite Recheneinrichtung (SC, AC) in die mindestens eine Leiterplatte (L) integriert sind.

12. Sensorvorrichtung nach Anspruch 10 oder 11, bei der die Sicherheitseinrichtung (SE) mindestens zwei Lagen von Leiterbahnen umfasst, die auf der mindestens einen Leiterplatte (L) ausgebildet sind, und die Leiterbahnen mindestens in einem zu schützenden Bereich des Gehäuses (G) ausgebildet sind.

13. Sensorvorrichtung nach einem der Ansprüche 9 bis 12, bei der das mindestens eine Sensorelement (SENS) in dem Gehäuse (G) angeordnet ist.

14. Sensorvorrichtung nach einem der Ansprüche 9 bis 13, bei der das mindestens eine Sensorelement (SENS) als ein Hall-Sensorelement, ein Induktiv-Sensorelement oder als ein GMR-Sensorelement ausgebildet ist.

15. Sensorvorrichtung nach einem der Ansprüche 9 bis 14, die als ein Geschwindigkeitsgeber für ein Fahrzeug ausgebildet ist.

## Claims

1. Method for operating a sensor apparatus (SV) which comprises
- a housing (G) having a security device (SE) for detecting unauthorized intervention in the housing (G),
- a secure first computation device (SC) which has a secure, non-volatile first memory (SMEM) and is arranged in the housing (G),
- a second computation device (AC) which comprises a second memory (DMEM) or is assigned the second memory (DMEM) and is arranged in the housing (G) with the second memory (DMEM), and
- at least one sensor element (SENS) which is electrically coupled to the second computation device (AC) for the purpose of supplying a sensor signal (SIG) from the at least one sensor element (SENS) to the second computation device (AC),
in which
- a temperature (T) is detected in the housing (G),
- the first computation device (SC) is activated only when the detected temperature (T) lies in a predefined temperature range (TB),
- a session key (SS) is determined by means of the first computation device (SC) and the session key (SS) is stored in the second memory (DMEM),
- the first computation device (SC) is deactivated after the session key (SS) has been stored in the second memory (DMEM),
- data are determined on the basis of the sensor signal (SIG) detected using the at least one sensor element (SENS), and
- the data are encrypted and/or signed by means of the second computation device (AC) on the basis of the session key (SS).

2. Method according to Claim 1, in which the first computation device (SC) is activated and/or deactivated under the control of the second computation device (AC).

3. Method according to one of the preceding claims, in which
- the security device (SE) of the housing (G) is checked, and
- the first computation device (SC) is activated only when integrity of the housing (G) is determined when checking the security device (SE).

4. Method according to one of the preceding claims, in which
- in addition to storing the session key (SS) in the second memory (DMEM), the first computation device (SC) is used to read at least one program part (PROG) and/or at least one identification data item (ID) and/or at least one parameter (PAR) from the first memory (SMEM) and to store it/them in the second memory (DMEM), and
- the second computation device (AC) is operated using the transmitted at least one program (PROG) and/or at least one identification data item (ID) and/or at least one parameter (PAR).

5. Method according to one of the preceding claims, in which
- the security device (SE) of the housing (G) and at least one operating variable (BG) and/or ambient variable (UG) are monitored, and
- at least the session key (SS) is deleted from the second memory (DMEM) if violation of the integrity of the housing (G) or an impermissible value or an impermissible change in the value of the at least one operating variable (BG) or ambient variable (UG) is determined.

6. Method according to Claim 5, in which, in addition to the session key (SS), the transmitted at least one program part (PROG) and/or the transmitted at least one identification data item (ID) and/or the transmitted at least one parameter (PAR) is/are also deleted from the second memory (DMEM).

7. Method according to Claim 5 or 6, in which deletion is effected by overwriting.

8. Method according to one of Claims 5 to 7, in which the ambient variable (UG) is the temperature (T) in the housing (G) or in which the operating variable (BG) is an operating voltage (U) of the sensor apparatus (SV).

9. Sensor apparatus which comprises
- a housing (G) having a security device (SE) for detecting unauthorized intervention in the housing (G),
- a secure first computation device (SC) which has a secure, non-volatile first memory (SMEM) and is arranged in the housing (G),
- a second computation device (AC) which comprises a second memory (DMEM) or is assigned the second memory (DMEM) and is arranged in the housing (G) with the second memory (DMEM), and
- at least one sensor element (SENS) which is electrically coupled to the second computation device (AC) for the purpose of supplying a sensor signal (SIG) from the at least one sensor element (SENS) to the second computation device (AC),
and is designed
- to detect a temperature (T) in the housing (G),
- to activate the first computation device (AC) only when the detected temperature (T) lies in a predefined temperature range (TB),
- to determine a session key (SS) by means of the first computation device (SC) and to store the session key (SS) in the second memory (DMEM),
- to deactivate the first computation device (SC) after the session key (SS) has been stored in the second memory (DMEM),
- to determine data on the basis of the sensor signal (SIG) detected using the at least one sensor element (SENS), and
- to encrypt and/or sign the data by means of the second computation device (AC) on the basis of the session key (SS).

10. Sensor apparatus according to Claim 9, in which the housing (G) is formed from at least one printed circuit board (L) on which the first and/or the second computation device (SC, AC) is/are directly arranged.

11. Sensor apparatus according to Claim 10, in which the first and/or the second computation device (SC, AC) is/are integrated in the at least one printed circuit board (L).

12. Sensor apparatus according to Claim 10 or 11, in which the security device (SE) comprises at least two layers of conductor tracks which are formed on the at least one printed circuit board (L), and the conductor tracks are formed at least in a region of the housing (G) to be protected.

13. Sensor apparatus according to one of Claims 9 to 12, in which the at least one sensor element (SENS) is arranged in the housing (G).

14. Sensor apparatus according to one of Claims 9 to 13, in which the at least one sensor element (SENS) is in the form of a Hall sensor element, an inductive sensor element or a GMR sensor element.

15. Sensor apparatus according to one of Claims 9 to 14, which is in the form of a speed sensor for a vehicle.

## Revendications

1. Procédé pour faire fonctionner un dispositif (SV) capteur, qui comprend
- un boîtier (G) ayant un dispositif (SE) de sécurité pour la détection d'interventions non-autorisées dans le boîtier (G),
- un premier dispositif (SC) informatique de sécurité ayant une première mémoire (SMEM) rémanente de sécurité, qui est disposée dans le boîtier (G),
- un deuxième dispositif (AC) informatique, qui comprend une deuxième mémoire (DMEM) ou qui est associé à la deuxième mémoire (DMEM) et qui est disposé avec la deuxième mémoire (DMEM) dans le boîtier (G), et
- au moins un élément (SENS) capteur, qui est couplé électriquement avec le deuxième dispositif (AC) informatique et qui est destiné à envoyer un signal (SIG) de capteur du au moins un élément (SENS) capteur au deuxième dispositif (AC) informatique,
dans lequel
- on détecte une température (T) dans le boîtier (G),
- on ne met en fonctionnement le premier dispositif (SC) informatique que si la température (T) détectée est dans une plage (TB) de température prescrite,
- une clé (SS) de session est déterminée par le premier dispositif (SC) informatique et la clé (SS) de session est mémorisée dans la deuxième mémoire (DMEM),
- on met hors de fonctionnement le premier dispositif (SC) informatique après la mémorisation de la clé (SS) de session dans la deuxième mémoire (DMEM),
- on détermine des données en fonction du signal (SIG) de capteur détecté au moyen du au moins un élément (SENS) capteur et
- on chiffre et/ou on signe les données par le deuxième dispositif (AC) informatique en fonction de la clé (SS) de session.

2. Procédé suivant la revendication 1, dans lequel on met en fonctionnement et/ou hors de fonctionnement le premier dispositif (SC) informatique d'une manière commandée par le deuxième dispositif (AC) informatique.

3. Procédé suivant l'une des revendications précédentes, dans lequel
- on contrôle le dispositif (SE) de sécurité du boîtier (G) et
- on ne met en fonctionnement le premier dispositif (SC) informatique que si, lors du contrôle du dispositif (SE) de sécurité, une intégrité du boîtier (SG) est constatée.

4. Procédé suivant l'une des revendications précédentes, dans lequel
- en plus de la mémorisation de la clé (SS) de session dans la deuxième mémoire (DMEM), on lit par le premier dispositif (SC) informatique au moins une partie propre de programmes et/ou au moins une donnée (ID) d'identification et/ou au moins un paramètre (PAR) dans la première mémoire (SMEM) et on le mémorise dans la deuxième mémoire (DMEM) et
- on met en fonctionnement le deuxième dispositif (AC) informatique en utilisant le au moins un programme (PROG) et/ou la au moins une donnée (ID) d'identification et/ou au moins un paramètre (PAR) transmis.

5. Procédé suivant l'une des revendications précédentes, dans lequel
- on contrôle le dispositif (SE) de sécurité du boîtier (G) et au moins une grandeur (BG) de fonctionnement et/ou une grandeur (UG) ambiante et
- si l'on constate une atteinte à l'intégrité du boîtier (G) ou une valeur inadmissible ou une modification inadmissible de la valeur de la au moins une grandeur (BG) de fonctionnement ou de la grandeur (UG) ambiante, on efface au moins la clé (SS) de session de la deuxième mémoire (DMEM).

6. Procédé suivant la revendication 5, dans lequel outre la clé (SS) de session, on efface aussi la au moins une partie (PROG) de programme transmise et/ou la au moins une donnée (ID) d'identification transmise et/ou le au moins un paramètre (PAR) transmis de la deuxième mémoire (DMEM).

7. Procédé suivant la revendication 5 ou 6, dans lequel on effectue l'effacement par écrasement.

8. Procédé suivant l'une des revendications 5 à 7, dans lequel la grandeur (UG) ambiante est la température (T) dans le boîtier (G) ou dans lequel la grandeur (BG) de fonctionnement est une tension (U) de fonctionnement du dispositif (SV) capteur.

9. Dispositif capteur, qui comprend
- un boîtier (G) ayant un dispositif (SE) de sécurité pour la détection d'interventions non-autorisées dans le boîtier (G),
- un premier dispositif (SC) informatique de sécurité ayant une première mémoire (SMEM) rémanente de sécurité qui est disposée dans le boîtier (G),
- un deuxième dispositif (AC) informatique qui comprend une deuxième mémoire (DMEM) ou qui est associée à la deuxième mémoire (DMEM) et qui est disposée avec la deuxième mémoire (DMEM) dans le boîtier (G), et
- au moins un élément (SENS) capteur qui est couplé électriquement au deuxième dispositif (AC) informatique pour l'envoi d'un signal (SIG) de capteur du au moins un élément (SENS) capteur au deuxième dispositif (AC) informatique,
qui est constitué
- pour la détection d'une température (T) dans le boîtier (G),
- pour mettre en fonctionnement le premier dispositif (AC) informatique, seulement lorsque la température (T) détectée est dans une plage (TB) de température prescrite,
- pour la détermination d'une clé (SS) de session par le premier dispositif (SC) informatique et pour la mémorisation de la clé (SS) de session dans la deuxième mémoire (DMEM),
- pour mettre hors de fonctionnement le premier dispositif (SC) informatique après la mémorisation de la clé (SS) de session dans la deuxième mémoire (DMEM),
- pour la détermination de données en fonction du signal (SIG) de capteur détecté au moyen du au moins un élément (SENS) capteur et
- pour le chiffrement et/ou la signature des données par le deuxième dispositif (AC) informatique en fonction de la clé (SS) de session.

10. Dispositif capteur suivant la revendication 9, dans lequel le boîtier (G) est formé d'au moins une plaquette (L) à circuit imprimé, sur laquelle le premier et/ou le deuxième dispositif (SC, AC) informatique sont montés directement.

11. Dispositif capteur suivant la revendication 10, dans lequel le premier et/ou le deuxième dispositif (SC, AC) informatique sont intégrés dans la au moins une plaquette (L) à circuit imprimé.

12. Dispositif capteur suivant la revendication 10 ou 11, dans lequel le dispositif (SE) de sécurité comprend au moins deux couches de pistes conductrices qui sont formées sur la au moins une plaquette à circuit imprimé, et les pistes conductrices sont formées au moins dans une zone à protéger du boîtier (G).

13. Dispositif capteur suivant l'une des revendications 9 à 12, dans lequel le au moins un élément (SENS) capteur est disposé dans le boîtier (G).

14. Dispositif capteur suivant l'une des revendications 9 à 13, dans lequel le au moins un élément (SENS) capteur est formé d'un élément capteur à effet hall, d'un élément capteur inductif ou d'un élément capteur GMR.

15. Dispositif capteur suivant l'une des revendications 9 à 14, qui est constitué en indicateur de vitesse d'un véhicule.
